# EUROPÄISCHE PATENTSCHRIFT

(11) **EP 3 995 706 B1**
(45) Veröffentlichungstag und Bekanntmachung des Hinweises auf die Patenterteilung: **30.08.2023**
(21) Anmeldenummer: 21205845.7
(22) Anmeldetag: 02.11.2021
(51) Int. Cl.: F16B 13/06, F16B 13/12

(54) **SPREIZDÜBEL**
EXPANSION ANCHOR
CHEVILLE À EXPANSION

(30) Priorität: 07.11.2020 DE 102020129376
(43) Veröffentlichungstag der Anmeldung: 11.05.2022
(73) Patentinhaber: fischerwerke GmbH & Co. KG, 72178 Waldachtal (DE)
(72) Erfinder: Lehmann, David, 72275 Alpirsbach (DE); Schneider, Sebastian, 72293 Glatten (DE); Suchy, Ulrich, 72250 Freudenstadt (DE)
(74) Vertreter: Suchy, Ulrich Johannes

(56) Entgegenhaltungen:
- EP-A1- 3 175 131
- EP-A1- 3 587 836
- EP-A2- 2 119 920
- WO-A1-2014/075776
- DE-A1-102013 107 075
- DE-T2- 69 009 182
- FR-A1- 3 027 639

## Beschreibung

Die Erfindung betrifft einen Spreizdübel mit den Merkmalen des Oberbegriffs des Anspruchs 1.

Aus der europäischen Patentanmeldung EP 2 119 920 A2 ist ein gattungsgemäßer Spreizdübel bekannt. Der bekannte Spreizdübel weist einen Dübelkörper auf, der aus einer ersten, relativ weichen Kunststoffkomponente hergestellt ist, und vier Spreizschenkel umfasst. Auf zwei dieser Spreizschenkel ist eine härtere Kunststoffkomponente eines zweiten Dübelkörpers aufgebracht, die die Funktion des Spreizdübels in einem Vollbaustoff, wie beispielsweise Beton oder Kalksandstein verbessern soll.

Aufgabe der Erfindung ist, einen alternativen Spreizdübel bereitzustellen, der als Universaldübel sowohl für Vollbaustoffe als auch für Platten- und Hohlbaustoffe, wie beispielsweise Gipskartonplatten oder Lochziegel, geeignet ist.

Diese Aufgabe wird erfindungsgemäß durch einen Spreizdübel mit den Merkmalen des Anspruchs 1 gelöst. Der erfindungsgemäße Spreizdübel weist einen ersten Dübelkörper aus einer ersten Kunststoffkomponente und einem zweiten Dübelkörper aus einer zweiten Kunststoffkomponente auf. Die beiden Dübelkörper bilden gemeinsam einen Spreizbereich, in dem der Spreizdübel durch das Einbringen eines Spreizelements, insbesondere durch das Eindrehen einer Schraube, aufspreizbar ist. "Aufspreizbar" bedeutet, dass sich der Durchmesser des Spreizdübels im Spreizbereich vergrößert. Mit "Durchmesser" ist der Durchmesser eines den Spreizbereich umschreibenden Zylinders gemeint. In dem Spreizbereich sind Spreizschenkel der beiden Dübelkörper angeordnet, die sich in Umfangsrichtung um einen sich in Längsrichtung des Spreizdübels erstreckenden Spreizkanal herum und in Umfangsrichtung voneinander beabstandet angeordnet sind. Insbesondere sind zwischen den Spreizschenkeln Schlitze ausgebildet, die insbesondere in Längsrichtung verlaufen und die die Spreizschenkel in Umfangsrichtung voneinander trennen. Die Schlitze sind insbesondere gerade, sie können aber beispielsweise auch wellenförmig, zick-zack-förmig oder mäanderförmig sein. Die Schlitze verlaufen insbesondere im Wesentlichen über die gesamte Länge des Spreizbereichs. "Schlitz" meint hier einen planmäßig vorgesehenen Abstand in Umfangsrichtung zwischen den Spreizschenkeln. Die Breite eines Schlitzes, also der Abstand zwischen den Spreizschenkeln, beträgt insbesondere 5 % bis 15 % des Durchmessers des Spreizdübels im Spreizbereich. Das heißt, dass bei einem 6er Spreizdübel, also bei einem Spreizdübel, der für die Verwendung in einem Bohrloch mit einem Nenndurchmesser von 6 Millimetern vorgesehen ist, sind die Schlitze ungefähr 0,3 Millimeter bis 0,9 Millimeter breit, bei einem 8er Spreizdübel ungefähr 0,4 Millimeter bis 1,2 Millimeter. Durch die Schlitze ergibt sich eine Beweglichkeit des Spreizdübels im Spreizbereich, die das Einbringen des Spreizdübels in ein Bohrloch erleichtert. Insbesondere kann der Spreizbereich in einem engen Bohrloch etwas zusammengedrückt werden. Zudem führt die Beweglichkeit zu einer guten Anpassung der Spreizschenkel an die Wand des Bohrlochs beziehungsweise an den Verankerungsgrund. Beim Verspreizen werden die Spreizschenkel im Spreizbereich, bezogen auf eine Längsachse des Spreizdübels, radial nach außen bewegt, wodurch sich der Durchmesser des Spreizdübels im Spreizbereich vergrößert. Die Längsachse des Spreizdübels verläuft mittig im Spreizdübel in Längsrichtung von einem hinteren Ende des Spreizdübels zu seinem vorderen Ende, mit dem der Spreizdübel voran planmäßig in Einbringrichtung in ein Bohrloch in einem Verankerungsgrund eingebracht wird.

Erfindungsgemäß bestehen die Spreizschenkel aus jeweils nur einer der Kunststoffkomponenten. Das bedeutet, dass jeder der Spreizschenkel, zumindest über drei Viertel seiner Länge, insbesondere über seine ganze Länge, aus nur einem Werkstoff, eben aus nur einer der beiden Kunststoffkomponenten besteht, und nicht aus beiden, wie dies aus dem Stand der Technik bekannt ist. Anders ausgedrückt: Der erfindungsgemäße Spreizdübel weist Spreizschenkeln auf, die zumindest über einen wesentlichen Teil ihrer Länge im Querschnitt aus nur einem Material bestehen. Mit "Länge" ist hier die Ausdehnung des Spreizschenkels in Längsrichtung gemeint. Durch die erfindungsgemäße Ausbildung des Spreizdübels wird nicht nur die Herstellung des Spreizdübels vereinfacht, sondern die Spreizschenkel können robuster ausgeführt werden, da sie keine filigranen, angespritzten Elemente aus einer zweiten Kunststoffkomponente mehr enthalten. Trotzdem sind die Spreizschenkel des erfindungsgemäßen Spreizdübels, durch die Verwendung unterschiedlicher Kunststoffkomponenten, für die Verankerung in unterschiedlichsten Baustoffen anpassbar. Beispielsweise kann durch die Verwendung einer harten Kunststoffkomponente ein starkes Anpressen an eine vollflächige Bohrlochwand in einem Vollbaustoff erreicht werden, während sie Spreizschenkel aus der weichen Kunststoffkomponente ein Ausknickten und/oder Verknoten in einem Hohlraum, beispielsweise hinter einer Gipskartonplatte oder in einem Lochstein, gewährleistet.

Vorzugsweise bestehen in Umfangsrichtung benachbarte Spreizschenkel im Spreizbereich aus unterschiedlichen Kunststoffkomponenten. Insbesondere weist der Spreizdübel vier Spreizschenkel auf, wovon zwei aus der ersten und zwei aus der zweiten Kunststoffkomponente hergestellt sind.

Weiterhin ist bevorzugt, dass Spreizschenkel, die aus derselben Kunststoffkomponente hergestellt sind, gemeinsam in einer Axialebene liegen.

Insbesondere liegen sich jeweils die beiden Spreizschenkel, die aus derselben Kunststoffkomponente hergestellt sind, bezogen auf die Längsachse gegenüber.

Die beiden Kunststoffkomponenten können sich beispielsweise nur in ihrer Farbe unterscheiden. Es kann beispielsweise das gleiche Grundmaterial verwendet werden, beispielsweise Polyamid, wobei dieses Grundmaterial für die erste Kunststoffkomponente beispielsweise schwarz, rot, blau oder grün und für die zweite Kunststoffkomponente beispielsweise grau oder weiß gefärbt ist. Vorzugsweise ist allerdings eine der Kunststoffkomponenten härter als die andere Kunststoffkomponente. Insbesondere kann eine der Kunststoffkomponenten mit Fasern, beispielsweise mit Glas- oder Carbonfasern verstärkt sein. Da im Spreizbereich des erfindungsgemäßen Spreizdübels Schlitze zwischen den Spreizschenkeln ausgebildet sind, ist er problemlos möglich, das gleiche Grundmaterial für beide Kunststoffkomponenten zu verwenden, da ein Verschmelzen der beiden Kunststoffkomponenten, was bei einer gleichen oder ähnlichen Schmelztemperatur der beiden Kunststoffkomponenten beim Zweikomponetenspritzgussverfahren auftreten kann und die Bewegung der Dübelkörper relativ zueinander verhindert, im Spreizbereich ausgeschlossen ist. Alternativ können zwei unterschiedliche Grundmaterialien verwendet werden, beispielsweise Polyamid als härteres Material und Polyethylen als weiches Material. Durch eine entsprechende Materialwahl kann das Spreizverhalten der Spreizschenkel unterschiedlich gestaltet und auf verschiedenste Baustoffe angepasst werden, in denen der Spreizdübel verwendet werden soll.

Die Bezeichnungen "härter" und "weicher" beziehen sich hier auf die Shore-Härte der verwendeten Kunststoffkomponenten, die nach dem Verfahren D gemäß DIN EN ISO 868:2003-10 gemessen und als "Shore D" bezeichnet wird.

Natürlich ist es auch möglich, dass die beiden Kunststoffkomponenten unterschiedliche Farben und Härte aufweisen und zudem aus unterschiedlichen Grundmaterialien bestehen.

Weiterhin ist bevorzugt, dass in Umfangsrichtung benachbarte Spreizschenkel unterschiedliche Querschnitte aufweisen. Durch die unterschiedlichen Querschnitte kann das Spreizverhalten der einzelnen Spreizschenkel angepasst werden. Insbesondere weisen Spreizschenkel, die sich bezogen auf die Längsachse gegenüberliegenden, den gleichen Querschnitt auf, sodass es zu einem symmetrischen Aufspreizen des Spreizbereich kommt. Insbesondere bildet die Längsachse eine Symmetrieebene für die Spreizschenkel.

Wird eine Kunststoffkomponente verwendet, die härter als die andere Kunststoffkomponente ist, dann weist ein Spreizschenkel, der aus der härteren Kunststoffkomponente hergestellt ist, vorzugsweise einen kleineren Querschnitt und insbesondere einen kleineren Widerstand gegen ein Ausknicken radial zur Längsachse auf, als ein Spreizschenkel, der aus der weicheren Kunststoffkomponente hergestellt ist. Durch das Anpassen der Querschnittsflächen beziehungsweise des Widerstandsmoments an die Härte der jeweiligen Kunststoffkomponente kann ein gleichmäßiges Aufspreizen des Spreizdübels in Spreizbereich erreicht werden, was insbesondere in Vollbaustoffen einen guten Halt und in Platten- und Hohlbaustoffen ein gleichmäßiges Hintergreifen der Platten beziehungsweise der Stege von Baustoffen ermöglicht.

Bei einer bevorzugten Ausgestaltungsform des erfindungsgemäßen Spreizdübels weist ein Spreizschenkel mindestens eine Sollknickstelle auf. Insbesondere ist die Sollknickstelle an einem Spreizschenkel aus der härteren Kunststoffkomponente ausgebildet. Insbesondere weist jeder der Spreizschenkel mindestens eine Sollknickstelle auf, was das Ausknicken und/oder Verknoten und das Hintergreifen in einem Hohlbaustoff beziehungsweise in einem Plattenbaustoff erleichtert. Die Sollknickstelle ist insbesondere als Querschnittsschwächung ausgeführt, insbesondere nutartig.

Weiterhin ist bevorzugt, dass die beiden Dübelkörper zwischen einem beim Einbringen in ein Bohrloch vorderen Ende und dem Spreizbereich und/oder zwischen einem beim Einbringen in ein Bohrloch hinteren Ende und den Spreizbereich dreh- und axialfest miteinander verbunden sind. Die Verbindung kann insbesondere formschlüssig, insbesondere durch ein Umspritzen von Rippen, Nuten oder ähnlichem erfolgen. Beispielsweise weist der erste Dübelkörper eine Rippe auf, die mit der Kunststoffkomponente des zweiten Dübelkörpers umspritzt ist. Zudem oder alternativ kann die Verbindung durch ein Verschmelzen der beiden Kunststoffkomponenten beim Umspritzen erfolgen, beispielsweise dann, wenn für die beiden Kunststoffkomponenten dasselbe Grundmaterial verwendet wird, beispielsweise ein Polyamid, und somit die beiden Kunststoffkomponenten die gleiche oder zumindest eine sehr ähnliche Schmelztemperatur aufweisen.

Die Herstellung des erfindungsgemäßen Spreizdübels erfolgt insbesondere im Mehrkomponentenspritzgießverfahren, in dem zunächst der erste Dübelkörper aus der ersten Kunststoffkomponente hergestellt und dann mit der zweiten Kunststoffkomponente des zweiten Dübelkörpers umspritzt wird.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispielsaufweisen, sind möglich.

Die Erfindung wird nachfolgend anhand eines in den Figuren dargestellten Ausführungsbeispiels näher erläutert.

Es zeigen:

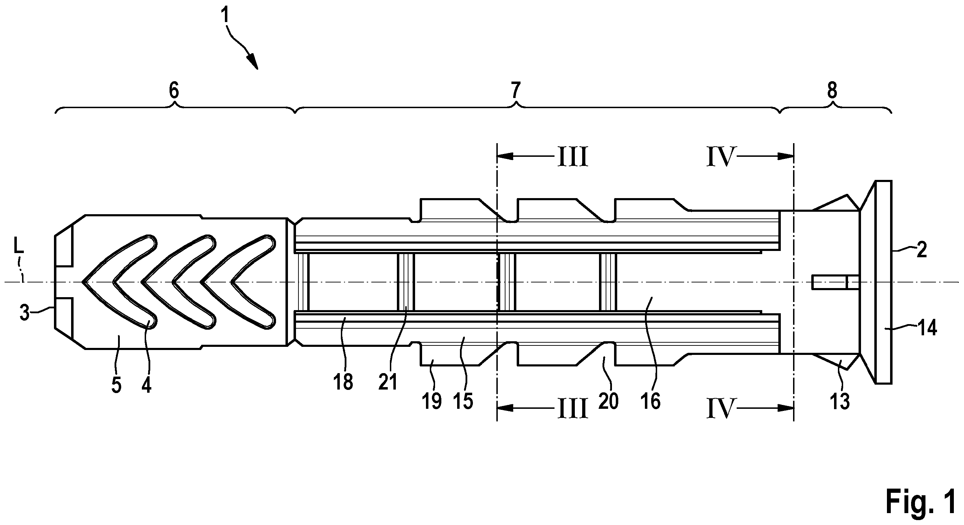

- Figur 1: einen erfindungsgemäßen Spreizdübel in einer Seitenansicht;
- Figur 2: den vorderen Teil eines ersten Dübelkörpers des Spreizdübels der Figur 1 in einer perspektivischen Darstellung;
- Figur 3: einen Radialschnitt durch den Spreizbereich des erfindungsgemäßen Spreizdübels im Bereich der Schnittlinie III - III der Figur 1; und
- Figur 4: einen Radialschnitt durch einen hinteren Teil des erfindungsgemäßen Spreizdübels im Bereich der Schnittlinie IV - IV der Figur 1.

Der erfindungsgemäße Spreizdübel 1 erstreckt sich von einem hinteren Ende 2 entlang einer Längsachse L, die mittig im Spreizdübel 1 in Längsrichtung verläuft, zu einem vorderen Ende 3, das beim planmäßigen Einbringen des Spreizdübels 1 ein Bohrloch (nicht dargestellt) als erstes in das Bohrloch eingeführt wird. Der Spreizdübel ist zur Verwendung in einem Bohrloch mit einem Nenndurchmesser von 8 Millimetern vorgesehen, also ein 8er Spreizdübel, der eine Länge von ungefähr 50 Millimetern aufweist. Der Spreizdübel 1 besteht aus einem ersten Dübelkörper 4 und einem zweiten Dübelkörper 5, der um den ersten Dübelkörper 4 gespritzt ist. Hierfür ist der Spreizdübel 1 in einem Zweikomponentenspritzgießverfahren hergestellt, wobei zunächst der erste Dübelkörper 4 aus einer ersten Kunststoffkomponente, einem grauen Polyamid gespritzt wird, und danach der zweite Dübelkörper 5 aus einer zweiten Kunststoffkomponente, einem härteren, carbonfaserverstärkten Polyamid, das schwarz gefärbt ist, um den ersten Dübelkörper 4 gespritzt wird. Das carbonfaserverstärkte Polyamid weist eine größere Härte nach Shore D auf, als das unverstärkte Polyamid des ersten Dübelkörpers 4.

Der Spreizdübel 1 weist, ausgehend von seinem vorderen Ende 3, einen vorderen hülsenartigen Abschnitt 6 auf, hinter dem ein Spreizbereich 7 angeordnet ist, auf den wiederum ein hinterer hülsenartiger Abschnitt 8 mit dem hinteren Ende 2 folgt. Im vorderen Abschnitt 6 und im hinteren Abschnitt 8 sind die beiden Dübelkörper 4, 5 dreh- und axialfest miteinander verbunden. Sie bilden jeweils gemeinsam eine Hülse zur Aufnahme einer Schraube als Spreizelement. Der erste Dübelkörper 4 weist im vorderen Abschnitt 6 V-förmige Verbinder 9, umlaufende Nuten 10 sowie Umfangsrippen 11 und im hinteren Abschnitt 8 ebenfalls eine umlaufende Nut 12 und Drehsicherungsrippen 13 auf, die mit der zweiten Kunststoffkomponente des zweiten Dübelkörpers 5 umspritzt sind, wodurch in den Abschnitten 6, 8 eine formschlüssige Verbindung zwischen den beiden Dübelkörpern 4, 5 entsteht. Der hintere Abschnitt 8 weist zudem einen Kragen 14 auf, der das hintere Ende 2 des Spreizdübels 1 bildet.

Zwischen dem vorderen hülsenartigen Abschnitt 6 und dem hinteren hülsenartigen Abschnitt 8 bilden die beiden Dübelkörper 4, 5 gemeinsam den Spreizbereich 7. Im Spreizbereich 7 sind zwei erste Spreizschenkel 15 des ersten Dübelkörpers 4 und zwei zweite Spreizschenkel 16 des zweiten Dübelkörpers 5 angeordnet. Der Spreizdübel 1 weist im Spreizbereich 7 ein Übermaß auf, so dass der Durchmesser des Spreizdübels 1 im Spreizbereich 7 8,4 Millimeter beträgt. Die Dübelkörper 4 und 5 sind jeweils einstückig, derart, dass die Spreizschenkel 15, 16 mit den vorderen und hinteren Abschnitten 6, 8 fest verbunden sind. Die Spreizschenkel 15, 16 sind in Umfangsrichtung abwechselnd um einen sich in Längsrichtung vom hinteren Ende 2 zum vorderen Ende 3 erstreckenden Spreizkanal 17 angeordnet, in den zum Aufspreizen des Spreizbereichs 7 eine Schraube als Spreizelement von hinten durch den hinteren hülsenartigen Abschnitt 8 einbringbar ist. Die Spreizschenkel 15, 16 bestehen somit jeweils paarweise und über ihre gesamte Länge aus der ersten oder der zweiten Kunststoffkomponente, aber nicht aus beiden Kunststoffkomponenten. Zwischen den Spreizschenkeln 15, 16 sind Längsschlitze 18 angeordnet, die gerade sind, parallel zur Längsachse L verlaufen und eine Breite von ungefähr 0,8 Millimetern aufweisen. Aufgrund der Längsschlitze 18 berühren sich die Spreizschenkel 15, 16 in Umfangsrichtung nicht. Beim Einführen des Spreizdübels 1 in ein Bohrloch wird der Spreizbereich 7 aufgrund des Übermaßes etwas zusammengedrückt, wodurch die Längsschlitze 18 zumindest teilweise geschlossen werden.

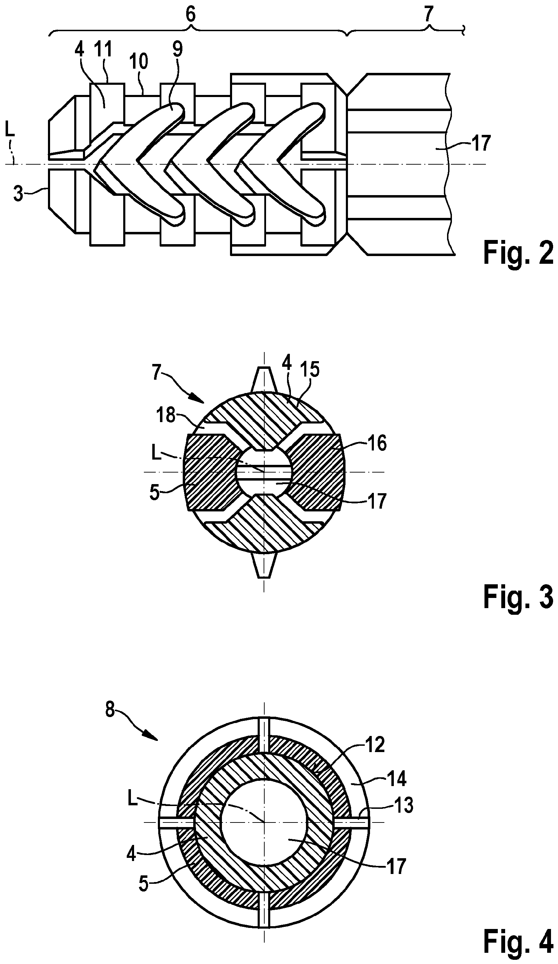

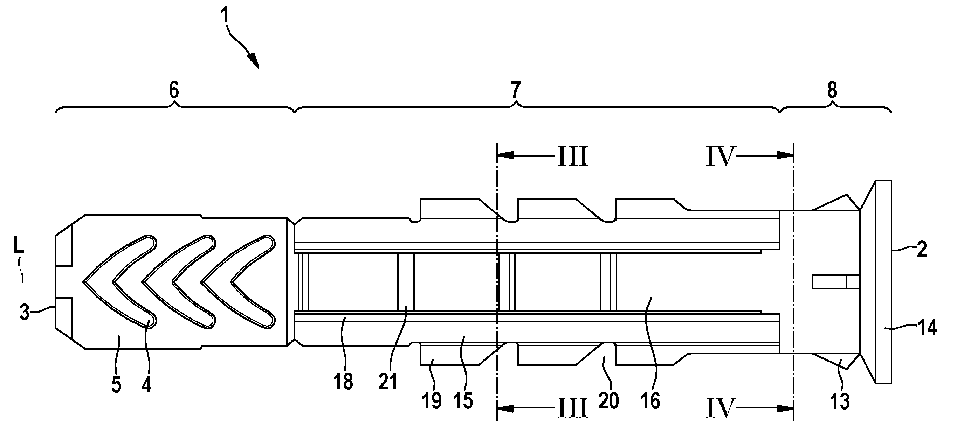

Wie in Figur 3 zu erkennen ist, bestehen die in Umfangsrichtung benachbarte Spreizschenkel 15, 16 aus den beiden unterschiedlichen Kunststoffkomponenten und die Spreizschenkel 15, 16, die aus derselben Kunststoffkomponente hergestellt sind, liegen jeweils in einer Axialebene, wobei die beiden Axialebenen senkrecht zueinanderstehen, sodass der Querschnitt spiegelsymmetrisch zur Längsachse L ist.

In Figur 3 ist zudem zu erkennen, dass die Spreizschenkel 15, 16 unterschiedliche Querschnitte aufweisen. Dabei ist der Querschnitt der zweiten Spreizschenkel 16, die aus der härteren Kunststoffkomponente hergestellt sind, kleiner als der der ersten Spreizschenkel 15, die aus der weicheren Kunststoffkomponente bestehen. Der kleinere Querschnitt der zweiten Spreizschenkel 16 führt zudem zu einem geringeren Widerstand beziehungsweise zu einem kleineren Widerstandsmoment gegen ein radiales Ausknicken der Spreizschenkel 15, 16 von der Längsachse L weg. Durch die Verbindung des härteren Kunststoffs mit dem geringeren Widerstand beziehungsweise dem größeren Querschnitt mit dem weicheren Kunststoff kommt es zu einem gleichmäßigen Aufspreizen des Spreizbereichs 7 des erfindungsgemäßen Spreizdübels 1. Dabei gewährleistet die Verwendung der weicheren Kunststoffkomponente für die ersten Spreizschenkel 15 mit größerem Querschnitt ein leichtes Ausknicken und/oder Verknoten und, aufgrund des relativ großen Querschnitts, die Bildung eines ausreichend großen Knotens hinter einem plattenförmigen Baustoff, beispielsweise einer Gipskartonplatte, oder einem Steg eines Lochbausteins. Die härteren zweiten Spreizschenkel 16 tragen ebenfalls zur Bildung des Knotens bei, können aber aufgrund ihrer Härte in einem Vollbaustoff große Spreizkräften auf die Wand des Bohrlochs, in dem der Spreizdübel 1 verankert wird, aufbringen. Zudem dienen die harten zweiten Spreizschenkel 16 zum Führen einer Schraube im Spreizkanal 17 im Spreizbereich 7, da diese aufgrund der Härte der zweiten Spreizschenkel 16 in diese nicht so gut einschneidet, wie in die aus der ersten Komponente hergestellten ersten Spreizschenkel 15. Zudem sind die härteren zweiten Spreizschenkel 15 auf ihrer dem Spreizkanal 17 zugewandten Seite hohlrund ausgebildet., so dass die zweiten Spreizschenkel 15 den Spreizkanal 17 im Spreizbereich 7 über einen größeren Umfang umschließen, als die ersten Spreizschenkel 15, was die Führung der Schraube im Spreizkanal 17 verbessert.

Damit auch die ersten Spreizschenkel 15 einen guten Halt in einem Bohrloch finden, weisen sie an einer Außenseite Längsrippen 19 auf, die durch erste Sollknickstellen 20 in Form von V-förmigen Vertiefungen unterbrochen sind. Die ersten Sollknickstellen 20 dienen ebenso wie die zweiten Sollknickstellen 21, die an den zweiten Spreizschenkeln 16 ausgebildet sind und in gleichen Radialebenen wie ersten Sollknickstellen 20 liegen, das Aufspreizen der Spreizschenkel 15, 16 zu kontrollieren, sodass das Knicken der Spreizschenkel 15, 16 an definierten Stellen erfolgt, sodass beispielsweise das Ausknicken und die Knotenbildung des Spreizdübels 1 in einem Platten- oder Hohlbaustoff planmäßig und wiederholbar erfolgt.

Der erfindungsgemäße Spreizdübel 1 ist aufgrund seiner Ausgestaltung universell in unterschiedlichsten Baustoffen verwendbar. Trotzdem ist er in einfacher Weise und kostengünstig im Spritzgussverfahren herstellbar.

### Bezugszeichenliste

- 1: Spreizdübel
- 2: hinteres Ende des Spreizdübels 1
- 3: vorderes Ende des Spreizdübels 1
- 4: erster Dübelkörper
- 5: zweiter Dübelkörper
- 6: vorderer hülsenartiger Abschnitt
- 7: Spreizbereich
- 8: hinterer hülsenartiger Abschnitt
- 9: V-förmiger Verbinder
- 10: umlaufende Nut im vorderen Abschnitt 6
- 11: Umfangsrippe
- 12: umlaufende Nut im hinteren Abschnitt 8
- 13: Drehsicherungsrippe
- 14: Kragen
- 15: erster Spreizschenkel
- 16: zweiter Spreizschenkel
- 17: Spreizkanal
- 18: Längsschlitz
- 19: Längsrippe
- 20: erste Sollknickstelle
- 21: zweite Sollknickstelle
- L: Längsachse

## Patentansprüche

1. Spreizdübel (1), der einen ersten Dübelkörper (4) aus einer ersten Kunststoffkomponente und einen zweiten Dübelkörper (5) aus einer zweiten Kunststoffkomponente aufweist, wobei die Dübelkörper (4, 5) gemeinsam einen Spreizbereich (7) bilden, in dem Spreizschenkel (15, 16) der Dübelkörper (4, 5) in Umfangsrichtung um einen sich in Längsrichtung des Spreizdübels (1) erstreckenden Spreizkanal (17) herum und in Umfangsrichtung voneinander beabstandet angeordnet sind,
**dadurch gekennzeichnet,**
**dass** die Spreizschenkel (15, 16) aus jeweils nur einer der Kunststoffkomponenten bestehen.

2. Spreizdübel nach Anspruch 1, **dadurch gekennzeichnet, dass** in Umfangsrichtung benachbarte Spreizschenkel (15, 16) aus unterschiedlichen Kunststoffkomponenten bestehen.

3. Spreizdübel nach Anspruch 1 oder 2, **dadurch gekennzeichnet, dass** Spreizschenkel (15, 16), die aus derselben Kunststoffkomponente hergestellt sind, in einer Axialebene liegen.

4. Spreizdübel nach einem der vorstehenden Ansprüche, **dadurch gekennzeichnet, dass** in Umfangsrichtung benachbarte Spreizschenkel (15, 16) unterschiedliche Querschnitte aufweisen.

5. Spreizdübel nach einem der vorstehenden Ansprüche, **dadurch gekennzeichnet, dass** eine der Kunststoffkomponenten härter als die andere Kunststoffkomponente ist.

6. Spreizdübel nach Anspruch 5, **dadurch gekennzeichnet, dass** ein Spreizschenkel (16), der aus der härteren Kunststoffkomponente hergestellt ist, einen kleineren Querschnitt aufweist, als ein Spreizschenkel (15), der aus der weicheren Kunststoffkomponente hergestellt ist.

7. Spreizdübel nach Anspruch 5 oder 6, **dadurch gekennzeichnet, dass** Spreizschenkel (16), die aus der härteren Kunststoffkomponente hergestellt sind, im Spreizbereich (7) den Spreizkanal (17) über einen größeren Umfang umschließen, als die Spreizschenkel (15), die aus der weicheren Kunststoffkomponente hergestellt sind.

8. Spreizdübel nach einem der vorstehenden Ansprüche, **dadurch gekennzeichnet, dass** ein Spreizschenkel (15, 16) mindestens eine Sollknickstelle (20, 21) aufweist.

9. Spreizdübel nach einem der vorstehenden Ansprüche, **dadurch gekennzeichnet, dass** die beiden Dübelkörper (4, 5) zwischen einem beim Einbringen in ein Bohrloch vorderen Ende (3) und dem Spreizbereich (7) dreh- und axialfest miteinander verbunden sind.

10. Spreizdübel nach einem der vorstehenden Ansprüche, **dadurch gekennzeichnet, dass** die beiden Dübelkörper (4, 5) zwischen einem beim Einbringen in ein Bohrloch hinteren Ende (2) und dem Spreizbereich (7) dreh- und axialfest miteinander verbunden sind.

## Claims

1. Expansion anchor (1) having a first anchor body (4) made of a first plastics component and a second anchor body (5) made of a second plastics component, the anchor bodies (4, 5) together forming an expansion region (7), in which expansion legs (15, 16) of the anchor body (4, 5) are arranged in the circumferential direction around an expansion channel (17) extending in the longitudinal direction of the expansion anchor (1) and are spaced apart from one another in the circumferential direction, **characterized in that**
the expansion legs (15, 16) each consist of only one of the plastics components.

2. Expansion anchor according to claim 1, **characterized in that** circumferentially adjacent expansion legs (15, 16) consist of different plastics components.

3. Expansion anchor according to either claim 1 or claim 2,
**characterized in that** expansion legs (15, 16) which are produced from the same plastics component are in an axial plane.

4. Expansion anchor according to any of the preceding claims,
**characterized in that** circumferentially adjacent expansion legs (15, 16) have different cross sections.

5. Expansion anchor according to any of the preceding claims,
**characterized in that** one of the plastics components is harder than the other plastics component.

6. Expansion anchor according to claim 5, **characterized in that** an expansion leg (16) which is produced from the harder plastics component has a smaller cross section than an expansion leg (15) which is produced from the softer plastics component.

7. Expansion anchor according to either claim 5 or claim 6,
**characterized in that** expansion legs (16) which are produced from the harder plastics component surround the expansion channel (17) in the expansion region (7) over a larger circumference than the expansion legs (15) which are produced from the softer plastics component.

8. Expansion anchor according to any of the preceding claims,
**characterized in that** an expansion leg (15, 16) has at least one predetermined bending point (20, 21).

9. Expansion anchor according to any of the preceding claims,
**characterized in that** the two anchor bodies (4, 5) are connected to one another for conjoint rotation and in an axially fixed manner between an end (3) which is at the front when inserted into a hole and the expansion region (7).

10. Expansion anchor according to any of the preceding claims,
**characterized in that** the two anchor bodies (4, 5) are connected to one another for conjoint rotation and in an axially fixed manner between an end (2) which is at the rear when inserted into a hole and the expansion region (7).

## Revendications

1. Cheville à expansion (1), laquelle présente un premier corps de cheville (4) en un premier composant en matière plastique et un second corps de cheville (5) en un second composant en matière plastique, les corps de cheville (4, 5) formant ensemble une zone d'expansion (7) dans laquelle des branches expansibles (15, 16) des corps de cheville (4, 5) sont disposées, dans la direction circonférentielle, autour d'un canal d'expansion (17) s'étendant dans la direction longitudinale de la cheville à expansion (1) et, dans la direction circonférentielle, sont espacées l'une de l'autre, **caractérisée en ce**
**que** les branches expansibles (15, 16) sont constituées de respectivement seulement l'un des composants en matière plastique.

2. Cheville à expansion selon la revendication 1, **caractérisée en ce que** des branches expansibles (15, 16) adjacentes dans la direction circonférentielle sont constituées de différents composants en matière plastique.

3. Cheville à expansion selon la revendication 1 ou 2,
**caractérisée en ce que** des branches expansibles (15, 16) fabriquées à partir du même composant en matière plastique sont situées dans un plan axial.

4. Cheville à expansion selon l'une des revendications précédentes,
**caractérisée en ce que** des branches expansibles (15, 16) adjacentes dans la direction circonférentielle présentent des sections transversales différentes.

5. Cheville à expansion selon l'une des revendications précédentes,
**caractérisée en ce que** l'un des composants en matière plastique est plus dur que l'autre composant en matière plastique.

6. Cheville à expansion selon la revendication 5, **caractérisée en ce qu'**une branche expansible (16) fabriquée à partir du composant en matière plastique plus dur présente une section transversale plus petite qu'une branche expansible (15) fabriquée à partir du composant en matière plastique plus mou.

7. Cheville à expansion selon la revendication 5 ou 6,
**caractérisée en ce que** des branches expansibles (16) fabriquées à partir du composant en matière plastique plus dur entourent le canal d'expansion (17) dans la zone d'expansion (7) sur une plus grande circonférence que celle des branches expansibles (15) fabriquées à partir du composant en matière plastique plus mou.

8. Cheville à expansion selon l'une des revendications précédentes,
**caractérisée en ce qu'**une branche expansible (15, 16) présente au moins un point de flexion théorique (20, 21).

9. Cheville à expansion selon l'une des revendications précédentes,
**caractérisée en ce que** les deux corps de cheville (4, 5) sont reliés entre eux de manière solidaire en rotation et de manière axialement fixe entre une extrémité avant (3) lors de l'introduction dans un trou percé au foret et la zone d'expansion (7).

10. Cheville à expansion selon l'une des revendications précédentes,
**caractérisée en ce que** les deux corps de cheville (4, 5) sont reliés entre eux de manière solidaire en rotation et de manière axialement fixe entre une extrémité arrière (2) lors de l'introduction dans un trou percé au foret et la zone d'expansion (7).
